Europäisches Patentamt

European Patent Office

Office européen des brevets

(19)

(11) Veröffentlichungsnummer : **0 105 231**
**B1**

(12) **EUROPÄISCHE PATENTSCHRIFT**

(45) Veröffentlichungstag der Patentschrift :
25.03.87

(51) Int. Cl.⁴ : **C 08 B 11/12**

(21) Anmeldenummer : 83108991.7

(22) Anmeldetag : 12.09.83

(54) **Verfahren zur Veretherung von Cellulose mit Monochloressigsäurealkylestern.**

(30) Priorität : 30.09.82 DE 3236158

(43) Veröffentlichungstag der Anmeldung :
11.04.84 Patentblatt 84/15

(45) Bekanntmachung des Hinweises auf die Patenterteilung : 25.03.87 Patentblatt 87/13

(84) Benannte Vertragsstaaten :
AT BE CH DE FR GB IT LI NL SE

(56) Entgegenhaltungen :
US-A- 3 900 463
CHEMICAL ABSTRACTS, Band 84, Nr. 20, 17. Mai
1976, Seite 113, Zusammenfassung Nr. 137472j
COLUMBUS, OHIO; (US)
CHEM. ZENTRALBLATT, Nr. 45, 1962, Seite 16532
ICHIRO SUZUKI: "Herstellung von Natrium-cellulose-
Glykolat".
ABSTRACT BULLETIN OF THE INSTITUTE OF PAPER
CHEMISTRY, Band 54, Nr. 2, August 1983, Seite 208,
Zusammenfassung Nr. 1857 (U) APPLETON, WISCON-
SIN, (US).

(73) Patentinhaber : HOECHST AKTIENGESELLSCHAFT
Postfach 80 03 20
D-6230 Frankfurt am Main 80 (DE)

(72) Erfinder : Perplies, Eberhard, Dr. Dipl.-Chem.
Rhoenstrasse 11
D-6229 Walluf (DE)
Erfinder : Felcht, Utz-Hellmuth, Dr. Dipl.-Chem.
Hubertusstrasse 2
D-6232 Bad Soden-Neuenhain (DE)

EP 0 105 231 B1

**0 105 231**

**Beschreibung**

Die Erfindung betrifft ein Verfahren zur Herstellung von wasserlöslicher Natriumcarboxymethylcellulose (NaCMC) durch Veretherung von Cellulose mit Monochloressigsäurealkylestern.

Wasserlösliche Celluloseether haben sich in der Praxis aufgrund ihrer Eigenschaften ein breites Anwendungsgebiet gesichert, wozu u. a. ihr Viskositätsverhalten, ihr Wasserrückhaltevermögen, ihre Oberflächenaktivität, ihr Filmbildungs- und ihr Bindevermögen beitragen. Zu den bekanntesten dieser Celluloseether zählt die NaCMC, wobei im allgemeinen dabei auch Cellulosemischether mitgerechnet werden, die neben der in der Hauptsache vorhandenen ionischen Natriumcarboxymethylgruppe (NaCM) auch noch nichtionische Substituenten wie Methyl-, Hydroxyethyl- und/oder Hydroxypropylgruppen aufweisen, beispielsweise gehören zu diesen NaCMMC, NaCMHEC oder NaCMMHPC. Diese NaCMC wird beispielsweise in folgenden technischen Gebieten und Produkten eingesetzt : Waschmittelherstellung, Erdölbohrung, Bergbau, Textilindustrie, Papierherstellung, Kleb- und Anstrichstoffe, Nahrungsmittel, Kosmetik und Pharmazie.

Aus dem Stand der Technik sind bereits eine Reihe von diskontinuierlichen oder kontinuierlichen Herstellungsverfahren bekannt siehe beispielsweise in Ullmanns Encyklopädie der technischen Chemie, Verlag Chemie — Weinheim, 4. Auflage, Band 9 (Butadien bis Cytostatika), 1975, Stichwort « Celluloseäther », Seiten 203/204, die im wesentlichen auf zwei Grundprinzipien beruhen :
— die Veretherung wird in einem wäßrig-alkalischen Medium durchgeführt, oder
— die Veretherung wird in einem wäßrig-alkalischen, zusätzlich aber ein organisches Lösemittel wie Isopropanol oder tert. Butanol enthaltendem medium (« Slurry », Dispersion) durchgeführt.

Bei beiden Verfahrensalternativen können als Veretherungsmittel die freie Monochloressigsäure oder eines ihrer Salze (meist Natriummonochloracetat) zum Einsatz kommen. Als Alternative für diese Veretherungsmittel sind auch bereits entsprechende Ester bekannt.

In der DE-OS 2 062 245 (= US-PS 3 705 890) oder der DE-AS 2 556 754 (= US-PS 4 097 667) wird Cellulose oder werden Cellulosederivate wie Celluloseether mit Chlorameisensäureestern in Gegenwart einer Base umgesetzt, wobei diese Ester in der Regel bifunktionell reagieren und wasserunlösliche Reaktionsprodukte ergeben.

Bei dem Verfahren zur Herstellung von Alkali-CMC gemäß der US-PS 3 900 463 wird Cellulose zunächst mit einem Veretherungsmittel aus der Gruppe Alkalimonochloracetat und Monochloressigsäurealkylester in einem Lösemittelsystem aus Wasser und mindestens einem organischen Lösemittel in Wechselwirkung gebracht, bis eine gleichmäßige Verteilung des Veretherungsmittels innerhalb der Cellulosemasse erreicht ist. Vom Veretherungsmittel werden 0,4 bis 2,0 Mol pro Mol Cellulose eingesetzt. Erst nach dieser primären Vermischung mit dem Veretherungsmittel werden die Alkalisierung mit mindestens 2 Mol Alkalihydroxid pro Mol Chloressigsäureester und die eigentliche Veretherungsreaktion durchgeführt. Als organische Lösemittel kommen Alkan($C_2$ bis $C_4$)ole, -diole und -triole, Alk($C_1$ bis $C_4$)oxy-alkanole, aromatische Kohlenwasserstoffe oder Dialkyl($C_1$ bis $C_4$)ketone in Betracht. Das Lösemittelsystem wird in einer Menge von mindestens 2 Gew.-Teilen, bevorzugt 6 bis 16 Gew.-Teilen, pro Gew.-Teil Cellulose eingesetzt. Die Reaktionszeit beträgt für die erste Stufe etwa 1 h bei einer Temperatur von weniger als 40 °C, wonach sich die Alkalisierung bei etwa gleicher Temperatur und gleichem Zeitbedarf anschließt ; die eigentliche Veretherungsreaktion wird bei 60 bis 80 °C während mehrerer Stunden durchgeführt. Als besondere Vorteile des Einsatzes von Monochloressigsäureestern gegenüber Alkalimonochloracetaten wird herausgestellt, daß sie a) eine bessere Löslichkeit in organischen Lösemitteln, b) eine größere Reaktionsaktivität und c) eine größere Reaktionsselektivität aufweisen und d) weniger große Mengen an organischen Lösemitteln erfordern. Die mit den Estern als Veretherungsmittel hergestellten NaCMC-Typen zeigen (nach den Angaben in den Beispielen 24 bis 27) Viskositäten in 1 %iger wäßriger Lösung zwischen 106 und 180 mPa · s bei DS-Werten von 0,70 bis 1,06.

Bei der praktischen Durchführung der aus der letztgenannten US-PS bekannten Verfahrensweise zeigt sich jedoch, daß durch die nachträgliche Alkalisierung ein Ausbeuteverlust an umgesetztem Veretherungsmittel eintritt, der möglicherweise darauf zurückzuführen ist, daß die Möglichkeit der Nebenreaktionen des umzusetzenden Monochloressigsäurealkylesters mit dem Alkalisierungsmittel bei der nachträglichen Alkalisierung eher gegeben ist als bei Vorliegen von Alkalicellulose vor der Veretherungsstufe. Außerdem ist es nach dem Verfahren gemäß dieser US-PS nicht möglich, eine NaCMC mit sehr hohen Viskositäten von beispielsweise 50 000 mPa · s, 100 000 mPa · s oder mehr in 1,8 %iger wäßriger Lösung nach Höppler bei 20 °C zu erzeugen. Dies gelingt auch nicht nach den anderen weiter oben angegebenen üblichen Verfahren zur NaCMC-Herstellung, ebenso nicht für eine Versuchsdurchführung unter Überlagerung eines Inertgases wie Stickstoff.

Aufgabe der vorliegenden Erfindung ist, ein solches Verfahren zur Herstellung von wasserlöslicher NaCMC vorzuschlagen, das mit möglichst hoher Substitutionsausbeute verläuft und das es ermöglicht, auch NaCMC-Typen mit extrem hohen Viskositäten zu erzeugen.

Die Erfindung geht aus von dem Verfahren zur Herstellung von wasserlöslicher NaCMC durch Veretherung von Cellulose mit Monochloressigsäurealkylestern in wäßrigalkalischer, mindestens ein organisches Lösemittel enthaltender Dispersion. Das erfindungsgemäße Verfahren ist dann dadurch gekennzeichnet, daß a) die Cellulose in wäßrigalkalischer, gegebenenfalls ein organisches Lösemittel

2

enthaltender Dispersion alkalisiert und danach b) die Alkalicellulose in der Hauptsache mit dem Veretherungsmittel Monochloressigsäurealkylester in Anwesenheit des organischen Lösemittels umgesetzt wird.

Zu den Monochloressigsäurealkylestern zählen insbesondere solche mit Alkylgruppen von $C_1$ bis $C_4$ wie beispielsweise der Monochloressigsäuremethylester, -ethylester oder -isopropylester. Diese Verbindungen sind bekannt, sie sind unter Normalbedingungen intensiv riechende Flüssigkeiten, deren Schmelzpunkte (Fp) unter etwa — 25 °C und deren Siedepunkte (Kp) über etwa 130 °C liegen. Zu den Verbindungen, die unter den Begriff « wasserlösliche NaCMC » fallen sollen, gehören nicht nur NaCMC-Typen mit einer Art von Substituenten, sondern auch Mischether, die neben den in der Hauptsache, d. h. zu mindestens 75 Gew.-% vorhandenen ionischen Natriumcarboxymethylgruppen auch noch nichtionische Substituenten wie Methyl-, Hydroxyethyl- und/oder Hydroxypropylgruppen oder auch weitere ionische Substituenten wie Sulfonsäureethyl-, Phosphonsäuremethyl- oder N,N-Dialkylaminoethylgruppen aufweisen.

Das erfindungsgemäße Verfahren kann diskontinuierlich oder auch kontinuierlich in einem der von der Celluloseetherchemie her bekannten Aggregate (z. B. Kneter, Rührkessel oder Wurfmischer) durchgeführt werden. Wenn die Temperatur des Reaktionsgemisches so hoch gewählt wird, daß sie über der Siedetemperatur des Gemisches organisches Lösemittel/Veretherungsmittel/Wasser liegt, empfiehlt sich die Durchführung des erfindungsgemäßen Verfahrens in einer Druckapparatur ; auch bei Einsatz von unter Normalbedingungen (Normaldruck, Raumtemperatur) bereits gasförmigen Reaktionskomponenten wird üblicherweise in einer Druckapparatur gearbeitet (z. B. bei Einsatz von Ethylenoxid als Zweitveretherungsmittel bei der Herstellung von Mischethern). Die in den folgenden Ausführungen angegebenen Mengenanteile für die Komponenten geben lediglich die Summe der Anteile der zur Reaktion erforderlichen Komponenten zu Beginn der Veretherungsstufe an, dann liegt z. B. nach der Alkalisierungsstufe bereits ein Teil der Cellulose und des Alkalimetallhydroxids als Alkalicellulose vor ; oder die Alkalimetallhydroxidmenge ist nicht nur für die Veretherungsreaktion selbst erforderlich, sondern teilweise auch zur Hydrolyse der Monochloressigsäurealkylester.

Die eingesetzte Cellulose ist entweder natürlicher Herkunft, beispielsweise Baumwoll-Linters oder Holzzellstoff, oder liegt in regenerierter Form wie als Cellulosehydrat vor ; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfaserig angelieferten Cellulose zu « Pulvern » erreicht werden kann.

Die Basen für die Alkalisierung werden bevorzugt als Alkalimetallhydroxid — üblicherweise NaOH, aber auch KOH oder LiOH — in fester Form oder in gelöster Form als wäßrige Alkalimetallhydroxid-Lösung (beispielsweise in 20 bis 50 Gew.-%iger Konzentration) eingesetzt. Sofern Alkalimetallhydroxide als Basen eingesetzt werden, beträgt ihr Anteil im allgemeinen 1,0 bis 8,0 Mol, insbesondere 1,3 bis 6,0 Mol, pro Mol Cellulose (als Anhydro- -glucose-Einheit gerechnet). Der Anteil der Veretherungsmittel, in der Hauptsache des Monochloressigsäurealkylesters, aber bei der Herstellung von Mischethern auch von Verbindungen wie Methylchlorid, Ethylenoxid, Propylenoxid, Chlorethansulfonsäure, Chlormethanphosphonsäure oder 1-N,N-Diethylamino-2-chlorethan, liegt bevorzugt im Bereich von 0,4 bis 5,0 Mol, insbesondere von 0,5 bis 2,5 Mol, pro Mol Cellulose. Die Menge an Lösemittelgemisch aus Wasser und zweckmäßig einem mit Wasser mischbaren, insbesondere einem wasserlöslichen organischen Lösemittel wie Isopropanol oder tert. Butanol liegt bevorzugt im Bereich von 3 bis 25 Gew.-Teilen pro Gew.-Teil Cellulose, wobei der Wasseranteil in diesem Gemisch im allgemeinen zwischen 3 und 40 Gew.-% liegt ; dieser Wasseranteil soll dabei 2,5 bis 25 Mol pro Mol Cellulose betragen. Oftmals kann es günstig sein, daß als organisches Lösemittel der Typ von Alkohol eingesetzt wird, der auch bei der Hydrolyse des eingesetzten Monochloressigsäurealkylesters entsteht ; beispielsweise kann Isopropanol als organisches Lösemittel neben dem Monochloressigsäureisopropylester als Veretherungsmittel eingesetzt werden, so daß bei der Aufarbeitung des verwendeten Lösemittelgemisches Alkohol/Wasser einheitliche Fraktionen entstehen, die leicht wieder in das Verfahren zurückgeführt werden können.

Bei der praktischen Durchführung des erfindungsgemäßen Verfahrens wird zweckmäßig bereits die Cellulose im Gemisch aus organischem Lösemittel, Wasser und Alkalimetallhydroxid alkalisiert, wonach die Zugabe des bzw. der Veretherungsmittel(s) in einer oder mehreren Stufe(n) — abhängig von der Art des oder der Veretherungsmittel(s) — erfolgt. Es ist aber auch eine Alkalisierung ohne Anwesenheit eines organischen Lösemittels möglich, wobei dessen Zugabe bei der oder den Veretherungsstufe(n) erfolgt. Alle Stufen werden in der Regel unter guter Durchmischung gefahren. In der separaten Alkalisierungsstufe wird üblicherweise bei Raumtemperatur (von 0 °C ab, insbesondere von 15 bis 35 °C) gearbeitet, die Veretherung verläuft besonders erfolgreich bei einer Temperatur zwischen 30 und 120 °C, insbesondere bis zu 85 °C. Die erforderlichen Zeiten in der Alkalisierungsstufe liegen im allgemeinen bei etwa 15 bis 60 min, die in der Veretherungsstufe zwischen — je nach Reaktionstemperatur — 30 min und 4 h. In einer Trennvorrichtung (z. B. einer Zentrifuge) wird das Rohprodukt, bevorzugt nach Zugabe von Säure bis zur Neutralisation der noch unverbrauchten Basen, zunächst vom Hauptteil der flüssigen Komponenten befreit und kann gegebenenfalls danach einer Extraktion zur Entfernung anhaftender Salze unterzogen werden ; abschließend wird es getrocknet und kann gegebenenfalls gemahlen, mit weiteren Komponenten vermischt oder auch granuliert werden ; diese Aufarbeitungs-, Reinigungs- und Nachbehandlungsmethoden sind die in der Celluloseetherchemie üblichen und benötigen deshalb keine ausführliche Beschreibung.

Der Einsatz von Monochloressigsäurealkylestern als Veretherungsmittel-Komponente bei der Herstellung von wasserlöslicher NaCMC führt insbesondere zu folgenden Vorteilen :

— Die Gleichmäßigkeit der Substitution an den Cellulosemolekülen ist mindestens mit der vergleichbar, die mit Monochloressigsäure als Veretherungsmittel erzielt werden kann, sie ist deutlich besser als die mit Natriummonochloracetat erzielbare.

— Es können oftmals Viskositäten von deutlich über 100 000 mPa · s (in 1,8 %iger wäßriger Lösung nach Höppler) beobachtet werden, wobei diese hohen Viskositäten in der Regel auch in wäßrigen Salzlösungen nicht wesentlich abnehmen.

— Das Veretherungsmittel ist problemlos und sicher zu lagern und zu handhaben, d. h. weder besonders kälteempfindlich (Fp ≤ — 25 °C) noch besonders leicht zu verdampfen (Kp ≥ 130 °C), und außerdem weniger ätzend und aggressiv als die freie Säure.

— Die Zugabe (Dosierung) ins Reaktionsgemisch ist unproblematisch, da die bei der Zugabe der Monochloressigsäure vorhandene Möglichkeit der lokalen Unterschreitung des pH-Werts in den sauren Bereich hier nicht auftreten kann. Eine solche pH-Wert-Verschiebung in den sauren Bereich ist aber an sich unerwünscht, da sie einerseits einen Abbau der Polymerkette der Cellulosemoleküle zur Folge hat, und damit eine der Ursachen für einen Viskositätsabbau darstellt, andererseits die gebildete Alkalicellulose zerstört.

— Gegenüber einer Reaktionsführung mit vorheriger Vermischung mit dem Veretherungsmittel und nachfolgender Alkalisierung wird eine bessere Substitutionsausbeute pro Mol eingesetztem Veretherungsmittel erzielt, und es treten weniger Reaktionsnebenprodukte (wie Glykolsäure/Natriumglykolat) auf, die nach Durchführung der Reaktion erst umständlich aus dem Gemisch organisches Lösemittel/Wasser entfernt werden müssen.

In den folgenden Beispielen verhalten sich Gew.-Teile zu Vol.-Teilen wie kg zu dm³, die Prozentangaben sind auf das Gewicht bezogen. Die angegebenen Viskositätswerte wurden im Höppler-Kugelfallviskosimeter in 1,8 %iger wäßriger Lösung bei 20 °C (es wird von einem trockenen Celluloseether ausgegangen) oder in einem Rotationsviskosimeter in 1 %iger wäßriger Lösung bei 20 °C und einem Schergefälle von $\tau$ °D = $10^1$ bestimmt. Der « DS » ist der Substitutionsgrad, d. h. die mittlere Anzahl von substituierten OH-Gruppen pro Anhydro-D-glucose-Einheit ; er liegt bei Cellulose im Bereich von 0,0 bis 3,0. Die Salzwasserbeständigkeit (SB-Werte) wird so bestimmt, daß die Viskosität der Probe in wäßriger NaCl-Lösung mit der in wäßriger Lösung verglichen wird, wobei ein Anstieg der Viskosität als sehr gut, ein Gleichbleiben der Viskosität als gut, ein leichtes Absinken als ausreichend und ein stärkeres Absinken als weniger geeignet bezeichnet wird. Der wasserunlösliche Rückstand der Probe (WUR-Werte) wird gravimetrisch bestimmt und ist in % angegeben.

## Beispiel 1 und Vergleichsbeispiele V1 und V2

In einem Rührgefäß werden 691 Gew.-Teile (13,1 Gew.-Teile pro Gew.-Teil Cellulose) eines 87 %igen wäßrigen Isopropanols mit 53 Gew.-Teilen eines Holzzellstoffs eines mittleren Polymerisationsgrads von 1 150 (im wesentlichen auf eine Teilchengröße von weniger als 0,5 mm vermahlen) und mit 34,5 Gew.-Teilen NaOH (2,8 Mol pro Mol Cellulose) vermischt. Diese Alkalisierung wird während 30 min bei 20 °C durchgeführt. Danach werden 54,7 Gew.-Teile Monochloressigsäureisopropylester (1,3 Mol pro Mol Cellulose) zugegeben. In zwei Parallelversuchen werden Monochloressigsäure (V1) und Natriummonochloracetat (V2) als Veretherungsmittel in gleichen Molanteilen eingesetzt, wobei jedoch die eingesetzte Molmenge an NaOH bei der Alkalisierung des Vergleichsbeispiels V2 auf 1,5 Mol gesenkt wird. Das jeweilige Reaktionsgemisch wird während 30 min auf 66 °C erwärmt und 60 min bei dieser Temperatur belassen. Bereits nach 10 min und dann fortlaufend nach jeweils 10 min wird je eine Probe aus der Reaktionsdispersion entnommen und der DS der NaCMC bestimmt. Dabei zeigt sich, daß das als Veretherungsmittel eingesetzte Salz bis zu einer Dauer von etwa 70 min (nach Beginn des Aufheizens) deutlich schneller als die Säure- bzw. Esteralternative reagiert, teilweise ist nach etwa 30 bis 40 min Dauer unter den vorgegebenen Reaktionsbedingungen ein etwa zu 50 % höherer DS zu beobachten ; danach nähert sich der DS sehr schnell einem Grenzwert. Der Einsatz der Ester als Veretherungsmittel verläuft offensichtlich unter gleichmäßigerer Substitution, wobei nach etwa 70 min Dauer auch eine weitere Substitution noch möglich ist und die erzielbaren DS-Werte die höchsten der 3 Alternativen sind. Der Substitutionsverlauf bei Einsatz der Säure ist im Bereich von etwa 30 bis 60 min Dauer ähnlich wie der des Esters, aber die erzielbaren Substitutionsgrade sind leicht höher. Wenn statt des Isopropylesters der Methyl- oder Ethylester eingesetzt wird, so ist ein nahezu identischer Substitutionsverlauf zu beobachten.

(Siehe Tabelle 1 Seite 5 f.)

## Beispiele 2-10

Die Maßnahme der $H_2$-$O_2$-Zudosierung (Beispiele 2, 5 und 8) liegt außerhalb des Umfangs der Ansprüche. In einem Rührgefäß wird das 87 %ige wäßrige Isopropanol vorgelegt und die Cellulose einer mittleren Teilchengröße von weniger als 0,5 mm (nach Mahlung) zugegeben. Bei den Beispielen 4, 7 und

4

Tabelle 1

| Veretherungsmittel | Substitutionsgrad (DS) nach einer Veretherungsdauer von (in min) | | | | | | | | |
|---|---|---|---|---|---|---|---|---|---|
| | 10 | 20 | 30 | 40 | 50 | 60 | 70 | 80 | 90 |
| Natriummonochloracetat | 0,06 | 0,25 | 0,60 | 0,70 | 0,75 | 0,78 | 0,80 | 0,85 | 0,85 |
| Monochloressigsäure | 0,05 | 0,16 | 0,43 | 0,56 | 0,67 | 0,72 | 0,78 | 0,86 | 0,87 |
| Monochloressigsäure-isopropylester | 0,03 | 0,22 | 0,38 | 0,53 | 0,63 | 0,67 | 0,82 | 0,88 | 0,92 |

10 wird das Rührgefäß mehrmals evakuiert und das Gemisch mit Stickstoff überlagert. Anschließend wird NaOH in gelöster oder fester Form zugegeben, und es wird während 30 min bei 20 °C alkalisiert. Das Veretherungsmittel Monochloressigsäureisopropylester wird aus einem Meßgefäß unter leichtem Vakuum in das Rührgefäß gesaugt, und die Dispersion — in den Beispielen 4, 7 und 10 nach erneuter Stickstoffüberlagerung — wird während 30 min auf 66 °C gebracht und während 60 min bei dieser Temperatur belassen. In den Beispielen 2, 5 und 8 wird der Dispersion zur Viskositätserniedrigung eine 15 %ige wäßrige $H_2O_2$-Lösung zudosiert und das Gemisch dann während 30 min zur Nachreaktion gebracht. Nach Abkühlung auf 40 °C wird in allen Beispielen mit 0,5 bis 1 Vol.-Teil Eisessig auf einen pH-Wert von etwa 8 neutralisiert, die entstandene NaCMC wird abgetrennt, ausgewaschen und getrocknet. Die Einsatzmengen und Ergebnisse der Beispiele sind der folgenden Tabelle zu entnehmen. Unter den eingesetzten Cellulosetypen ist folgendes zu verstehen :

Typ A : Holzzellstoff eines mittleren Polymerisationsgrads von 550,

Typ B : Baumwoll-Linters eines mittleren Polymerisationsgrads von 2 500,

Typ C : Holzzellstoff eines mittleren Polymerisationsgrads von 1 600.

Das NaOH wird entweder als 50 %ige wäßrige Lösung (Art X) oder in fester Form (Art Z) eingesetzt. In den Angaben für den Wasseranteil sind die Mengen aus dem 87 %igen Isopropanol und die aus der wäßrigen NaOH-Lösung enthalten.

Verglichen mit den nach den bekannten Verfahren hergestellten guten bis sehr guten Handelsprodukten auf dem NaCMC-Gebiet zeigen die nach dem erfindungsgemäßen Verfahren erzeugten NaCMC-Typen eine vergleichbare, teilweise sogar bessere Salzwasserbeständigkeit und in den Beispielen 4 und 7 Viskositätswerte, die deutlich über den sonst bekannten höchsten Werten von etwa 50 000 (in 1,8 %iger Lösung) bzw. 4 000 (in 1 %iger Lösung) liegen. Die wäßrigen Lösungen sind ebenso klar wie die von guten bis sehr guten Handelsprodukten. Die wasserunlöslichen Rückstände bewegen sich im Rahmen des üblichen und sind bei dem Vorteil der erreichbaren extrem hohen Viskositäten zu vernachlässigen.

Tabelle 2

| Beispiel | Zielsetzung bezogen auf | |
|---|---|---|
| | Veretherungsgrad | Viskosität |
| 2 | niedrig | niedrig |
| 3 | niedrig | mittel |
| 4 | niedrig | hoch |
| 5 | mittel | niedrig |
| 6 | mittel | mittel |
| 7 | mittel | hoch |
| 8 | hoch | niedrig |
| 9 | hoch | mittel |
| 10 | hoch | hoch |

Tabelle 2 (Fortsetzung)

| Beispiel | wäßrigem 87%igem Isopropanol in VT | in GT pro GT Cellulose | Wasseranteil in Mol pro Mol Cellulose | Cellulose Typ | Menge in GT | NaOH Art | Menge in GT | Menge in Mol pro Mol Cellulose | Monochloressigsäure-isopropylester Menge in GT | Menge in Mol pro Mol Cellulose | 15%ige wäßrige $H_2O_2$-Lösung in GT |
|---|---|---|---|---|---|---|---|---|---|---|---|
| 2 | 450 | 12,3 | 18,58 | A | 30,0 | X | 27,90 | 2,0 | 14,30 | 0,50 | 4,0 |
| 3 | 450 | 12,3 | 18,16 | A | 30,0 | X | 25,10 | 1,8 | 19,00 | 0,80 | – |
| 4 | 455 | 12,4 | 14,55 | B | 30,0 | Z | 12,55 | 1,8 | 19,00 | 0,80 | – |
| 5 | 432 | 12,3 | 19,58 | A | 28,8 | X | 33,50 | 2,5 | 27,50 | 1,25 | 4,6 |
| 6 | 450 | 12,3 | 18,58 | A | 30,0 | X | 27,90 | 2,0 | 21,40 | 0,90 | – |
| 7 | 460 | 12,5 | 14,71 | B | 30,0 | Z | 15,40 | 2,3 | 23,75 | 1,10 | – |
| 8 | 435 | 12,5 | 14,70 | A | 28,4 | Z | 27,70 | 4,2 | 45,00 | 2,00 | 5,6 |
| 9 | 435 | 12,5 | 14,70 | C | 28,4 | Z | 27,70 | 4,2 | 45,00 | 2,00 | – |
| 10 | 435 | 12,5 | 14,70 | B | 28,4 | Z | 27,70 | 4,2 | 45,00 | 2,00 | – |

Einsatzmengen an

VT = Vol.-Teile    GT = Gew.-Teile

Tabelle 2   (Fortsetzung)·

| Beispiel | Eigenschaften der NaCMC | | | | |
|---|---|---|---|---|---|
| | DS | Viskosität einer | | SB | WUR |
| | | 1,8%igen Lösung | 1%igen Lösung | | |
| 2 | 0,40 | 27 | – | sehr gut | 0,60 |
| 3 | 0,67 | 270 | – | sehr gut | 0,75 |
| 4 | 0,67 | 370 000 | 12 700 | ausreichend | 2,20 |
| 5 | 0,91 | 14 | – | gut | 0,64 |
| 6 | 0,73 | 230 | – | sehr gut | 0,59 |
| 7 | 0,81 | 310 000 | 9 400 | ausreichend | 0,54 |
| 8 | 1,23 | 23 | – | gut | 0,96 |
| 9 | 1,17 | 6 530 | – | gut | 1,10 |
| 10 | 1,30 | 22 340 | – | gut | 1,20 |

## Patentansprüche

1. Verfahren zur Herstellung von wasserlöslicher Natriumcarboxymethylcellulose durch Veretherung von Cellulose mit Monochloressigsäurealkylestern in wäßrig-alkalischer, mindestens ein organisches Lösemittel enthaltender Dispersion, dadurch gekennzeichnet, daß

a) die Cellulose in wäßrig-alkalischer, gegebenenfalls ein organisches Lösemittel enthaltender Dispersion alkalisiert, und danach

b) die Alkalicellulose in der Hauptsache mit dem Veretherungsmittel Monochloressigsäurealkylester in Anwesenheit des organischen Lösemittels umgesetzt wird.

2. Verfahren nach Anspruch 1, dadurch gekennzeichnet, daß die Monochloressigsäurealkylester Alkylgruppen von $C_1$ bis $C_4$ aufweisen.

3. Verfahren nach Anspruch 1 oder 2, dadurch gekennzeichnet, daß als Monochloressigsäurealkylester der Monochloressigsäure-methyl-, -ethyl- oder -isopropylester eingesetzt wird.

4. Verfahren nach einem der Ansprüche 1 bis 3, dadurch gekennzeichnet, daß das Reaktionsgemisch zu Beginn der Stufe b) pro Mol Cellulose 1,0 bis 8,0 Mol Alkalimetallhydroxid, 0,4 bis 5,0 Mol Veretherungsmittel und 3 bis 25 Mol Wasser und pro Gew.-Teil Cellulose 3 bis 25 Gew.-Teile des Lösemittelgemisches Wasser/organisches Lösemittel aufweist.

5. Verfahren nach einem Ansprüche 1 bis 4, dadurch gekennzeichnet, daß als organisches Lösemittel Isopropanol und als Veretherungsmittel der Monochloressigsäureisopropylester eingesetzt wird.

## Claims

1. A process for preparing water-soluble sodium carboxymethyl cellulose, by etherifying cellulose with alkyl monochloroacetates in an aqueous-alkaline dispersion which contains at least one organic solvent, wherein

a) the cellulose is alkalized in an aqueous-alkaline dispersion which optionally comprises an organic solvent and

b) the alkali cellulose is then reacted essentially with an alkyl monochloroacetate as the etherifying agent, in the presence of the organic solvent.

2. A process as claimed in claim 1, wherein the alkyl monochloroacetates comprise alkyl groups having from 1 to 4 carbon atoms.

3. A process as claimed in claim 1 or claim 2, wherein the methyl, ethyl or isopropyl monochloroacetate is used as the alkyl monochloroacetate.

4. A process as claimed in any of claims 1 to 3, wherein the reaction mixture, at the beginning of step b), comprises from 1.0 to 8.0 moles of alkali metal hydroxide, from 0.4 to 5.0 moles of etherifying agent and from 3 to 25 moles of water, per mole of cellulose and from 3 to 25 parts by weight of the solvent mixture composed of water and organic solvent, per part by weight of cellulose.

5. A process as claimed in any of claims 1 to 4, wherein isopropanol is used as the organic solvent and isopropyl monochloroacetate is used as the etherifying agent.

**Revendications**

1. Procédé pour la préparation de carboxyméthylcellulose sodique soluble dans l'eau, par éthérification de la cellulose avec des monochloracétates d'alkyle en dispersion aqueuse alcaline, contenant au moins un solvant organique, caractérisé en ce que

a) on alcalinise la cellulose en dispersion aqueuse alcaline, contenant éventuellement un solvant organique, et ensuite

b) on fait réagir l'alcali-cellulose essentiellement avec l'agent d'éthérification constitué de monochloracétate d'alkyle, en présence du solvant organique.

2. Procédé selon la revendication 1, caractérisé en ce que le monochloracétate d'alkyle présente des groupes alkyle en $C_1$-$C_4$.

3. Procédé selon la revendication 1 ou 2, caractérisé en ce que l'on utilise en tant que monochloracétate d'alkyle le monochloracétate de méthyle, d'éthyle ou d'isopropyle.

4. Procédé selon l'une des revendications 1 à 3, caractérisé en ce que le mélange réactionnel comporte au début de l'étape b), par mole de cellulose, 1,0 à 8,0 moles d'hydroxyde de métal alcalin, 0,4 à 5,0 moles d'agent d'éthérification et 3 à 25 moles d'eau, et par partie en poids de cellulose, 3 à 25 parties en poids du mélange de solvants eau/solvant organique.

5. Procédé selon l'une des revendications 1 à 4, caractérisé en ce que l'on utilise en tant que solvant organique l'isopropanol, et en tant qu'agent d'éthérification, le monochloracétate d'isopropyle.